# EUROPEAN PATENT SPECIFICATION

(11) **EP 4 035 505 B1**
(45) Date of publication and mention of the grant of the patent: **08.11.2023**
(21) Application number: 20775007.6
(22) Date of filing: 24.09.2020
(51) Int. Cl.: H05B 47/115, H05B 47/12, G10L 21/0272

(54) **SYSTEMS AND METHODS FOR FUSING SENSOR DATA FOR DERIVING SPATIAL ANALYTICS**
SYSTEME UND VERFAHREN ZUR FUSION VON SENSORDATEN ZUR ABLEITUNG RÄUMLICHER ANALYTIK
SYSTÈMES ET PROCÉDÉS DE FUSION DE DONNÉES DE CAPTEUR POUR DÉRIVER DES ANALYSES SPATIALES

(30) Priority: 25.09.2019 US 201962905794 P; 10.10.2019 EP 19202501
(43) Date of publication of application: 03.08.2022
(73) Proprietor: Signify Holding B.V., 5656 AE Eindhoven (NL)
(72) Inventor: MURTHY, Abhishek, 5656 AE Eindhoven (NL)
(74) Representative: Verweij, Petronella Daniëlle
(86) International application number: PCT/EP2020/076667
(87) International publication number: WO 2021/058627

(56) References cited:
- US-A1- 2014 379 305
- US-A1- 2015 380 013
- US-A1- 2019 214 019
- ZIKOS STYLIANOS ET AL: "Conditional Random Fields - based approach for real-time building occupancy estimation with multi-sensory networks", AUTOMATION IN CONSTRUCTION, ELSEVIER, AMSTERDAM, NL, vol. 68, 25 May 2016 (2016-05-25), pages 128-145, XP029569319, ISSN: 0926-5805, DOI: 10.1016/J.AUTCON.2016.05.005
- AMAYRI MANAR ET AL: "Decision tree and Parametrized classifier for Estimating occupancy in energy management", 2018 5TH INTERNATIONAL CONFERENCE ON CONTROL, DECISION AND INFORMATION TECHNOLOGIES (CODIT), IEEE, 10 April 2018 (2018-04-10), pages 397-402, XP033364490, DOI: 10.1109/CODIT.2018.8394848

## Description

### FIELD OF THE INVENTION

The invention relates to systems and methods for fusing sensor data obtained from different types of sensors to derive spatial analytics or other information about a room and its occupancy.

### BACKGROUND

Commercial and residential spaces are equipped with lighting devices to provide illumination. For energy conservation and convenience, the lighting devices communicate with motion sensors to automatically turn on and off the light source of these lighting devices. For example, when an individual walks into a room, a motion sensor detects motion and causes a signal to turn on the light source automatically. If no motion is detected for a particular duration of time, it is assumed that there are no occupants in the area and the light source is turned off.

There are techniques to estimate occupancy of large areas using several motion sensors. Error in these estimations increases as the number of motion sensors are reduced. Occupancy estimation is generally more accurate for large spaces having multiple sensors over long periods of time. The prior art does not offer solutions for estimating occupancy with greater accuracy for smaller rooms or rooms with few motion sensors.

Independently, the occupancy of a room may be determined using audio-based sensors instead of motion. For example, U.S. Patent Publication No. 2019/0214019A1 describes an array of microphones that uses sound localization to count occupants by analyzing a direction of the sound and its intensity level. U.S. Patent Publication No. US20140379305A1 describes an ultrasonic sensor that generates a signal based on a sensed ultrasonic echo of the monitored area. Specifically, ultrasonic transducer sensors generate high frequency sound waves and evaluate the echoes, which are received back by the sensors.

US 2019/214019A1 discloses system for ways to count occupants in an area by sound. A system includes a data network, a light fixture having intelligent driver circuitry coupled to a light source, a lighting control device to control a light output and operations of the light source in an area, and a microphone coupled to the lighting control device. The lighting control device includes programming that configures a processor to control the microphone to sample and detect sound in the area, determine a location of the detected sound relative to a position of the microphone coupled to the lighting control device, and increment an occupant counter to correspond to each newly determined location of sound in the area for a predetermined period of time.

Non-patent literature "Decision tree and Parametrized classifier for Estimating occupancy in energy management" (DOI: 10.1016/J.AUTCON.2016.05.005) proposes an occupancy estimation approach within an ambiance sensing network which is based on measured acoustic pressure and K-means clustering.

The present disclosure overcomes the problems in the prior art by providing more accurate techniques of estimating room occupancy. In addition, the present disclosure improves the accuracy of spatial analysis in small rooms with fewer sensors.

### SUMMARY OF THE INVENTION

One aspect of the present invention is related to a system for estimating a number of occupants in a room as defined in independent claim 1.

The system includes a motion sensor configured to generate motion samples and a microphone configured to generate audio samples. The system may have a communication interface configured to communicate with a computing system such as, for example, a server. The system has at least one processor configured to detect motion events from the motion samples to determine a first estimated number of occupants in the room; analyze the audio samples to derive a second estimated number of occupants in the room; compare the first estimated number to the second estimated number; and generate an output comprising a number of occupants in the room in response to the comparison.

The system may include a lighting device such as, for example, a luminaire. According to one embodiment the lighting device includes the motion sensor and microphone. In addition, the lighting device includes the communication interface to communicate with the computing device. For example, the lighting device is a networked device that communicates with a server over the Internet or other network. The at least one processor may be installed in the lighting device and/or server to facilitate a distributed computing environment

According to another embodiment the motion sensor comprises a passive infrared sensor and wherein the motion events comprise at least a minor motion event and a major motion event.

The at least one processor is configured to analyze the audio samples by converting the audio samples into a series of feature vectors corresponding to a series of sample windows, and cluster the series of feature vectors into a number of clusters, wherein the number of clusters is the second estimated number.

This involves clustering the series of feature vectors into a number of clusters using the first estimated number as an initial cluster count. As an

example, the feature vectors are clustered according to k-means clustering such that the first estimated number is provided as a seed value to the k-means clustering. In one aspect of the present disclosure the series of feature vectors include Mel Frequency Cepstral Coefficients.

According to another embodiment, the system determines whether a cluster of feature vectors in the audio samples corresponds to audio originating from a speaker device.

Another aspect of the present invention is related to a computer-implemented method for estimating the number of occupants in a room as defined in independent claim 7.

### BRIEF DESCRIPTION OF THE DRAWINGS

Further details, aspects, and embodiments of the invention will be described, by way of example only, with reference to the drawings. Elements in the figures are illustrated for simplicity and clarity and have not necessarily been drawn to scale. In the figures, elements which correspond to elements already described may have the same reference numerals. In the drawings,
Fig. 1 schematically shows an example of an embodiment of a spatial analysis system,
Fig. 2 schematically shows an example of a room within the spatial analysis system of Fig. 1,
Fig. 3 depicts motion-related data and operations that may take place within the spatial analysis system of Fig. 1,
Fig. 4 depicts audio-related data and operations that may take place within the spatial analysis system of Fig. 1,
Figs. 5a through 5c depict a visualization of operations of a clustering module in an embodiment of the spatial analysis system of Fig. 1,
Fig. 6 is a flowchart illustrating an example of the functionality performed within the spatial analysis system of Fig. 1,
Fig. 7 a schematically shows an embodiment of a lighting device in the spatial analysis system of Fig. 1, and
Fig. 8 schematically shows an embodiment of a computing system in the spatial system of Fig. 1.

### DETAILED DESCRIPTION OF PREFERRED EMBODIMENTS

The embodiments shown in the drawings and described in detail herein should be considered exemplary of the principles of the invention and not intended to limit the invention to the specific embodiments shown and described herein.

In the following, for the sake of understanding, elements of embodiments are described in operation. However, it will be apparent that the respective elements are arranged to perform the functions being described as performed by them.

Further, the invention is not limited to the embodiments, and the invention lies in each and every novel feature or combination of features described herein or recited in mutually different dependent claims.

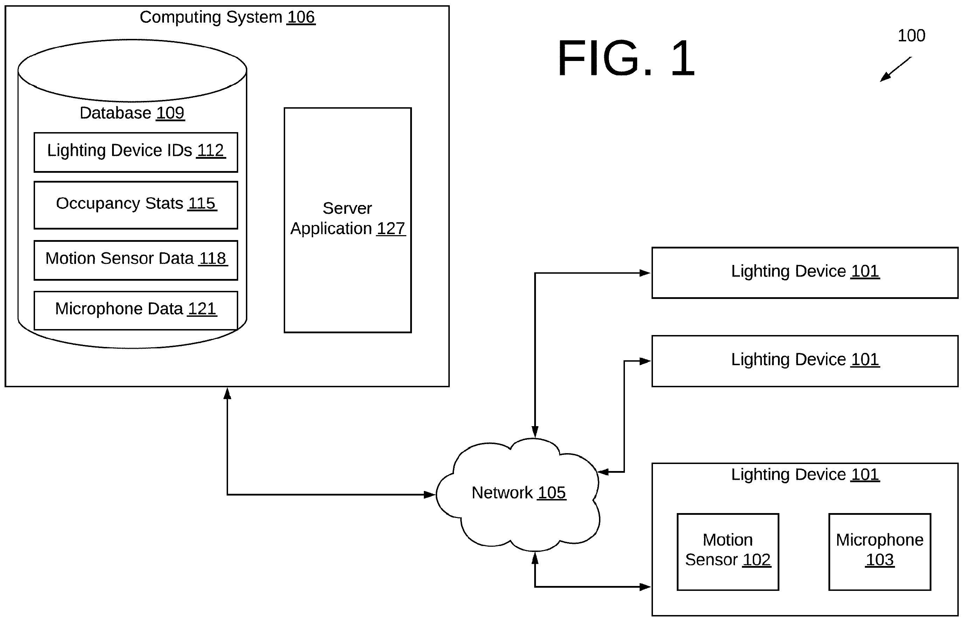

Fig. 1 schematically shows an example of an embodiment of a spatial analysis system 100. The spatial analysis system 100 is a networked environment that includes several components that may be distributed over a wide area. The spatial analysis system 100 includes one or more lighting devices 101. A lighting device 101 may be, for example, a luminaire that illuminates an area. The lighting device 101 includes a motion sensor 102 and a microphone 103. The motion sensor 102 may be a passive infrared sensor (PIR) or any other sensor that is responsive to electromagnetic signals for purposes of detecting motion. The microphone 103 may be an omnidirectional or directional microphone capable of responding to sound within a vocal audio range.

Each lighting device 101 communicates with other system components over a network 105. The network 105 includes the Internet, intranets, extranets, wide area networks (WANs), local area networks (LANs), wired networks, wireless networks, or other suitable networks, etc., or any combination of two or more such networks.

The spatial analysis system 100 of Fig. 1 further includes a computing system 106 coupled to the network 105. The computing system 106 may comprise, for example, a server computer or any other system providing computing capability. Alternatively, the computing system 106 may employ a plurality of computing devices that may be arranged, for example, in one or more server banks or computer banks or other arrangements. Such computing devices may be located in a single installation or may be distributed among many different geographical locations. For example, the computing system may include a plurality of computing devices that together may comprise a hosted computing resource, a grid computing resource and/or any other distributed computing arrangement. In some cases, the computing system 106 may correspond to an elastic computing resource where the allotted capacity of processing, network, storage, or other computing-related resources may vary over time. The computing system 106 may implement one or more virtual machines that use the resources of the computing system 106.

The computing system 106 includes a database 109. Various data is stored in the database 109 or other memory that is accessible to the computing system 106. The database 109 may represent one or more databases 109. The data stored in the database 109 includes, for example, lighting device identifiers (IDs) 112, occupancy statistics 115, motion sensor data 118, and microphone data 121, Lighting device IDs 112 includes data identifying each lighting device 101 coupled to the network 105. In this respect, the computing device 106 tracks each lighting device 101 so as to facilitate communication with each lighting device 101 on an independent and individual basis. Occupancy statistics 115 include data identifying the various rooms in which the lighting devices 101 are installed and the occupancy status in terms of the number of occupants over time. Motion sensor data 118 and microphone data 121 may include raw or processed data originating from the motion sensors 102 and microphones 103 of the various installed lighting devices. Various applications and/or other functionality may be executed in the computing system 106. This includes, for example, server application 127, which is configured to communicate with the lighting devices 101.

Next is a description of how the various components of Fig. 1 are configured to implement a spatial analysis system 100. One or more lighting devices 101 may be installed in a room where each lighting device 101 includes a motion sensor 102 and a microphone 103. The motion sensor 102 converts sensed motion into digital samples referred to as motion samples. Similarly, the microphone 103 senses sound and converts sensed sound into audio samples. Such digital samples may be created using an analog to digital converter (ADC). According to an embodiment, the lighting device transmits the motion samples and/or audio samples over the network to the computing system 106 for processing by the server application 127. Transmissions sent by the lighting device 101 may include a lighting device ID 112, which allows the computing system 106 to authenticate communication from a network of lighting devices 101. The received motion and/or audio samples may be stored as motion sensor data 118 and microphone data 121. In another embodiment, the lighting device 101 processes the motion samples and/or audio samples locally using an onboard processor.

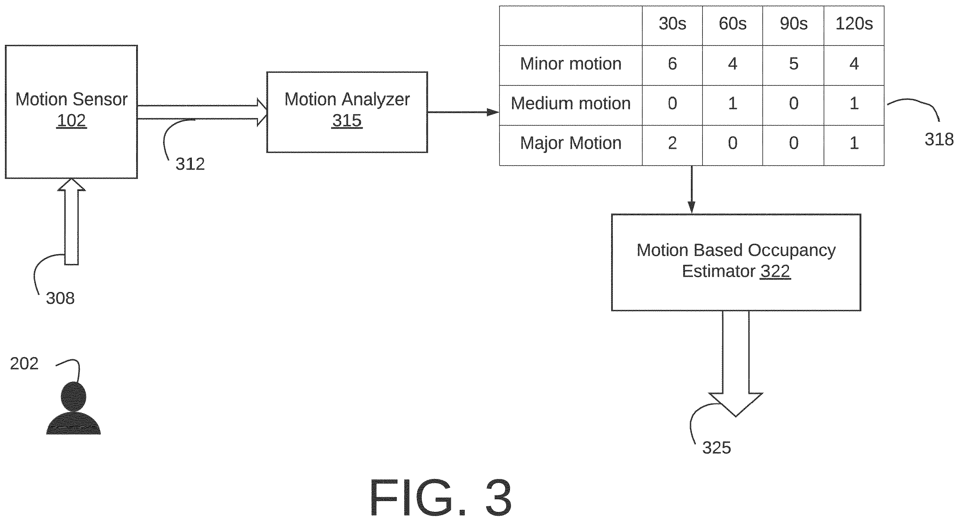

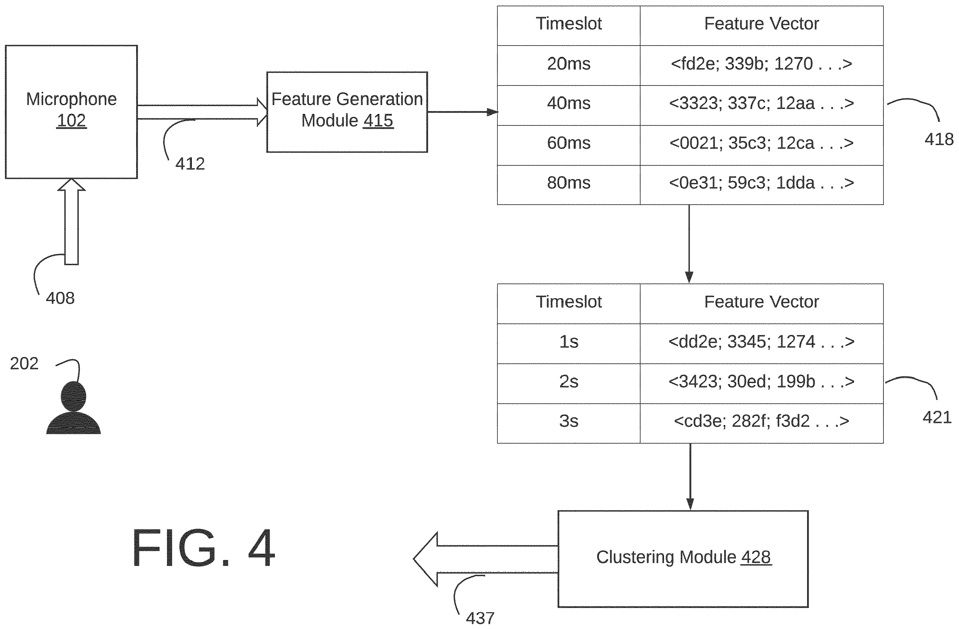

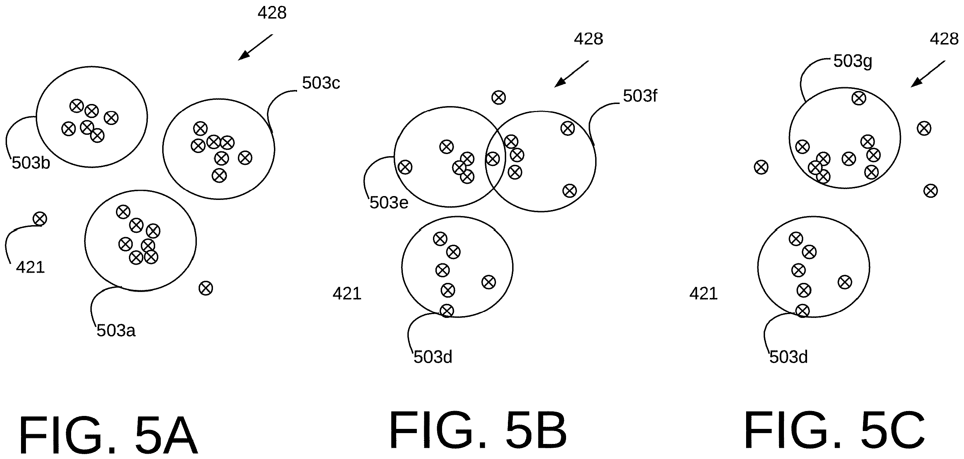

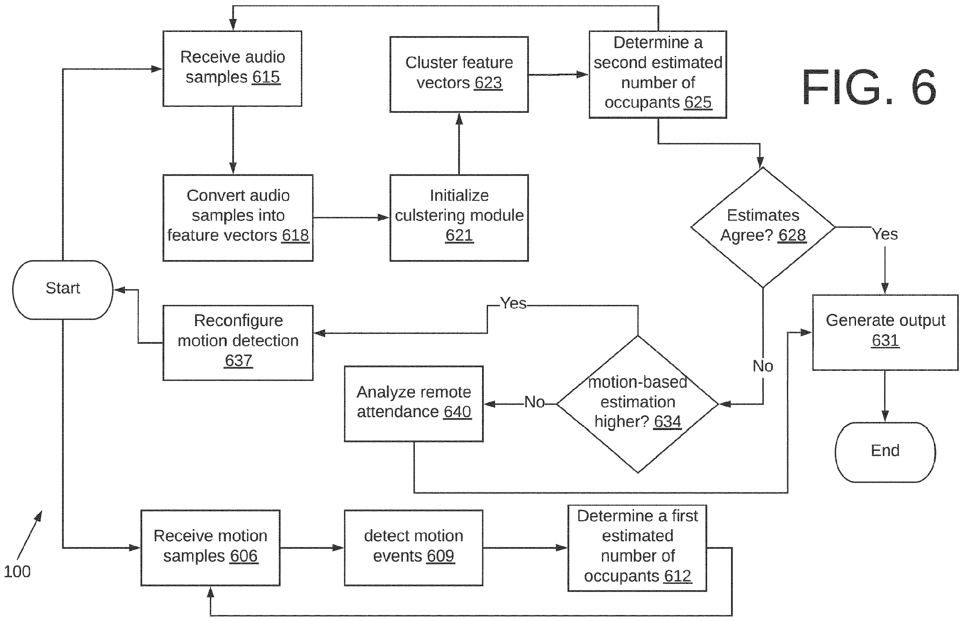

An estimated number of occupants is determined using the motion samples. An embodiment of this process is described in further detail with respect to Fig. 3. In addition, a separate estimated number of occupants is determined using the audio samples. Embodiments of this process are described in further detail with respect to Figs. 4 and 5a-c. The estimated number of occupants is derived from the motion sensor 102 and audio sensor 103 and may be stored as occupancy statistics 115. This process is described in greater detail with respect to Fig. 6.

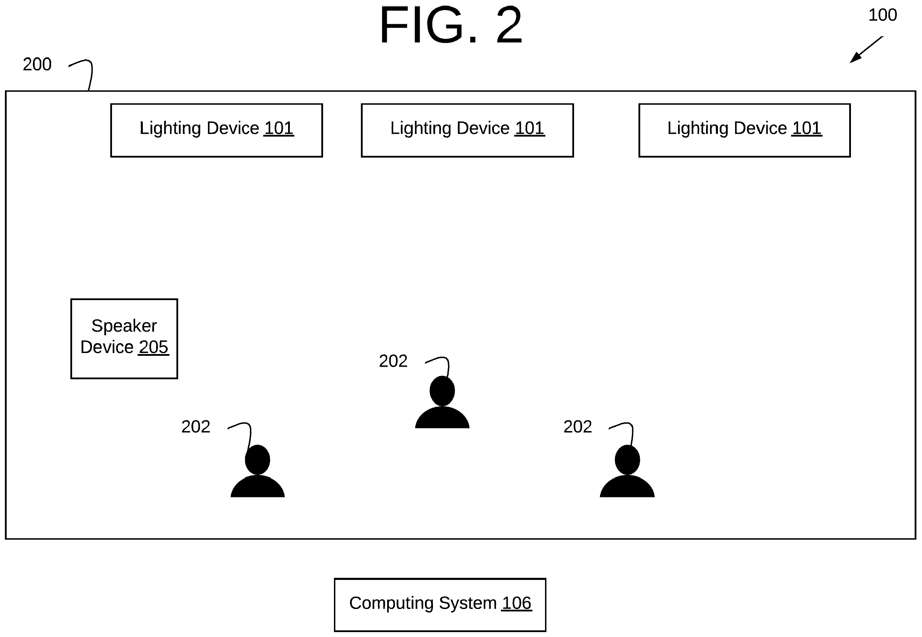

Fig. 2 schematically shows an example of a room 200 within the spatial analysis system of Fig. 1 according to an embodiment. The room 200 has been installed with lighting devices 101, each of which include a motion sensor 102 and audio sensor 103. One or more occupants 202 may be situated in the room. The room 200 includes a speaker device 205 to project audio. The speaker device 205 may be a speaker phone, computer speaker, sound system to facilitate teleconferencing and allow remote attendees to converse with occupants 202 in the room 200. A computing system 106 operates outside the room 200. As described in further detail with respect to the remaining figures, Fig. 2 shows an implementation of the spatial analysis system 100. Lighting devices 101 continue to detect motion and audio to estimate the number of occupants 202 over time as the number of occupants 202 change.

Fig. 3 depicts motion-related data and operations that may take place within the spatial analysis system 100 of Fig. 1 according to an embodiment. Fig. 3 shows a motion sensor 102 that detects motion 308 of an occupant 202. The occupant may move in different ways ranging from making minor motion to major motion. A major motion event may correspond to an occupant entering a room 200 while a minor motion event may correspond to a low level of movement while an occupant is sitting or standing. The motion sensor 102 converts the detected motion into motion samples 312. Motion samples 312 reflect a digital signal that represents motion 308 being detected. A motion analyzer 315 converts the motion samples 312 into processed motion data 318. The processed motion data 318 may be stored in the computing system 106 or stored in a memory of the lighting device 101. The motion analyzer 315 may comprise a software module that is executed by a processor in the lighting device 101, within a server application 127, or a combination thereof.

In the embodiment of Fig. 3, the motion analyzer 315 derives one or more motion events from the motion samples 312. Then, it classifies the motion event into a minor motion, medium motion, or major motion. The motion analyzer 315 counts the number of each type of motion event for a given time slot. As shown in Fig. 3, the timeslot lasts 30 seconds. For a given timeslot, the motion analyzer 315 counts the number of motion event types occurring for each motion event type. Within the first 30 seconds, the motion analyzer 315 counted six minor motion events, zero medium motion events, and two major motion events. For the next 30 seconds, the motion analyzer 315 counted four small motion events, one medium motion events, and zero major motion events.

The spatial analysis system 100 includes a motion based occupancy estimator 322, which may be executed by a processor in the lighting device 101, within a server application 127, or a combination thereof. The motion based occupancy estimator 322 analyzes the processed motion data 318 to derive a motion-based estimated number of occupants. This result may be stored as occupancy statistics 115. When performing this analysis, the motion based occupancy estimator 322 associates each major motion event as an incremental change in occupancy count and confirms whether the occupancy has changed based on the number of minor or medium motion events. Thus, Fig. 3 shows how motion 308 in a room is converted into an estimated number of occupants. This estimation is referred to as a motion-based estimation.

Fig. 4 depicts audio-related data and operations that may take place within the spatial analysis system 100 of Fig. 1 according to an embodiment. Fig. 4 shows a microphone 102 serving as an audio sensor that detects audio 408 originating from an occupant 202. The occupant may speak in their natural voice in a manner that is quantifiably distinct from other occupants 202. The microphone 102 converts detected audio 408 into audio samples 412. The audio sample rate may be significantly higher than the motion sample rate as a result of audio being high resolution data.

The spatial analysis system 100 includes a feature generation module 415 that is executed by a processor in the lighting device 101, within a server application 127, or a combination thereof. The feature generation module converts the audio samples 412 for a given timeslot into a feature vector 418 made up of coefficients. The feature vector 418 has a finite size that is relatively smaller than the size of an audio sample 412 for a particular timeslot. For example, if the timeslot is 20-40 milliseconds and the audio sample rate is 44,100 samples per second, there may be over a thousand samples for the given timeslot, which is significantly higher than the feature vector size.

The feature generation module 415 may convert the time domain audio samples 412 into the frequency domain using a Fourier transformation. Then it may filter out all the frequencies that are do not relate to the human vocal range or otherwise selecting a predetermined set of frequencies directed to the human voice. Then, the feature generation module 415 may perform a discrete log function followed by a discrete cosine transformation to derive the values of the coefficients that make up the feature vector 418. According to an embodiment, the feature generation module 415 generates the feature vectors 418 using Mel-frequency cepstral coefficients. In another embodiment, the feature generation module 415 generates the feature vectors 418 using octave band coefficients.

A feature vector 418 is determined for each timeslot. According to an embodiment, the spatial analysis system 100 increases the size of the audio timeslot. This process is performed in response to the initial audio timeslots being significantly short. Thus, if an audio timeslot is 20 milliseconds and the desired timeslot size is 1 second, the feature vectors 418 for all the 20 millisecond timeslots occurring within a 1 second timeslot are averaged to generate an average feature vector 421 for the 1 second timeslot.

The spatial analysis system 100 includes a clustering module 428 that is executed by a processor in the lighting device 101, within a server application 127, or a combination thereof. The clustering module 428 clusters together the different feature vectors 418 or average feature vectors 421 to identify one or more clusters. The number of clusters corresponds to an estimated number of occupants 437 based on the detected audio 408. Although Fig. 4 shows how feature vectors 418 may be averaged to form an average feature vectors 421, the phrase "feature vector" in general refers to either the feature vector 418 or the average feature vector 421 of Fig. 4.

Figs. 5a through 5c depict a visualization of operations of a clustering module 428 in an embodiment of the spatial analysis system of Fig. 1 according to an embodiment. Fig. 5a shows a plurality of feature vectors 421, each feature vector 421 may be visually represented as a data point positioned in space. The distance between two feature vectors 421 correlates to the degree of similarity. Two feature vectors 421 close in space, as depicted in Fig. 5a, represent two feature vectors 421 that are relatively similar. When several feature vectors 421 are considered, one or more clusters 503 emerge from the data. In this example, the clustering module 428 has clustered the feature vectors 421 into a first cluster 503a, a second cluster 503b, and a third cluster 503c. The number of clusters corresponds to the number of different vocal signatures or in other words, the number of unique speakers. Thus, the clustering module 428 identifies an estimated number of occupants based on audio by determining the number of clusters 503. As shown in Fig. 5a, there are three distinct clusters, which indicates three different people who have spoken.

According to an embodiment, the clustering module uses k-means clustering to cluster the feature vectors 421. Clustering is an iterative process which incrementally adjusts the way feature vectors 421 are clustered as new feature vectors 421 are provided to the clustering module 428.

Fig. 5b shows a clustering module 428 that clusters different feature vectors 421 compared to the feature vectors 421 of Fig. 5a. Here, the clustering module clusters the feature vectors 421 into a fourth cluster 503d, a fifth cluster 503e, and a sixth cluster 503f. Unlike the example in Fig. 5a, where the clusters 503 are tighter are more clearly defined, Fig. 5b shows a lack of clarity of whether the fifth cluster 503e and sixth cluster 503f should be considered one cluster or two separate clusters. Without knowing how many clusters there should be before clustering the feature vectors 421, the clustering module 428 may generate clusters with a lower confidence. This may lead to potential error.

Fig. 5c shows a clustering module 428 that clusters the same feature vectors 421 described as Fig. 5b. However, the clustering module 428 is initialized by assuming that there are potentially two clusters. As a result, the clustering module 428 identifies the same fourth cluster 503d. In addition, it resolves the issue arising in Fig 5c by identifying one more additional cluster 503g.

According to an embodiment of the invention, the clustering module 428 is initialized using the estimated number of occupants derived from the motion sensor 102, an example of which, is described in Fig. 3. In one embodiment, the feature vectors 421 are clustered according to k-means clustering such that the estimated number of occupants derived from the motion sensor 102 is used as a seed value to the k-means clustering. Although the clustering module 428 may use a seed value or some other initial number of clusters before performing a cluster analysis, the clustering module 428 may arrive at a different number of clusters than the initial seed value.

As explained above, the initial number of clusters provides a general guidance for initialization purposes, but does not necessarily force the cluster module to arrive at any particular result. This way, the audio-based occupancy estimation may be used to verify the motion-based occupancy estimation. It may also be used to detect discrepancies between the two. The occurrence of a discrepancy may indicate that one or more remote attendees are virtually present in the room but not physically present. The identification of a discrepancy may also be used to tune the parameters of the motion sensor 102, motion analyzer 315, or motion based occupancy estimator 322.

Fig. 6 is a flowchart illustrating an example of the functionality performed within the spatial analysis system of Fig. 1 according to an embodiment. The functionality may be implemented using a microphone 103 or other audio sensors as well as a motion sensors 102. In addition, the various operations and calculations may be executed by a local processor near the microphone 103 and motion sensor and/or remotely by a computing system 106 as part of a distributed environment.

At 606, the spatial analysis system 100 receives motion samples 312. A motion sensor 102 detects motion and the motion is converted into motion samples 312. The motion sensor 102 may be installed in a lighting device 101. At 609, the spatial analysis system 100 detects one or more motion events. The spatial analysis system 100 includes a motion analyzer 315 to identify motion events expressed in the motion samples 312 for a given timeslot. The motion analyzer 315 may classify the motion events into one among a plurality of motion event classifications such as a minor motion event or a major motion event. At 612, the spatial analysis system 100 determines a first estimated number of occupants. This first estimation may be referred to as a motion-based estimation. The first estimated number of occupants may be determined by detecting changes in the number of motion events counted for consecutive timeslots. The process repeats so that the spatial analysis system 100 continuously receives motion samples in order to determine an estimated number of occupants as each timeslot advances.

The spatial analysis system 100 may also concurrently detect audio. At 615, the spatial analysis system 100 receives audio samples 412. The spatial analysis system 100 includes a microphone 103 or audio sensor to receive audio and digitize them into audio samples 412. The microphone 103 may be installed in a lighting device 101 such that it is collocated with the motion sensor 102. At 618, the spatial analysis system 100 converts the audio samples into feature vectors 421. In this respect, each timeslot or frame of audio sample series is quantified as a relatively short vector of coefficients tailored to mathematically represent the vocal nature of the audio samples. A clustering module 428 is used to cluster each feature vector to determine a cluster count.

At 621, the spatial analysis system 100 initializes the clustering module. For example, the spatial analysis system 100 obtains the first estimated number of occupants determined at 612 and configures the clustering module 428 to input the first estimated number of occupants as an initial cluster count. At 623, the spatial analysis system 100 clusters the feature vectors 421 into clusters 503. At 625, the spatial analysis system 100 determines a second estimated number of occupants. The second estimated number of occupants is the cluster count. The second estimated number of occupants may also be referred to as the audio-based estimation. The process repeats so that the spatial analysis system 100 continuously receives audio samples in order to determine an estimated number of occupants as each timeslot advances.

At 628, the spatial analysis system 100 determines whether the audio-based estimation and the motion-based estimation agree. If the two estimations agree such that they are the same, the spatial analysis system 100 generates an output at 631. The output comprises a number of occupants in the room in response to the comparison. Thus, if the motion-based estimation branch yielded a first estimated number of occupants of five, and the audio-based estimation branch also yielded a second estimated number of occupants of five, then the output includes data indicating that there are five occupants for a given timeslot. This output is stored as an occupancy statistic 115. The computing system 106 may provide this data to client devices over the network 105, using, for example, a dashboard, mobile application, or client portal. In this respect, administrators can track room occupancy rates defined by the length of the timeslot.

If the two estimations disagree, then at 634, the spatial analysis system 100 determines whether the motion-based estimation is higher than the audio-based estimation. If the motion-based estimation is higher, the spatial analysis system 100 reconfigures the motion detection process at 637. For example, the spatial analysis system 100 may adjust the parameters that define how to classify a motion event. In other words, the spatial analysis system 100 may adjust the sensitivity of the classification process to improve the accuracy of detecting motion events.

If the motion-based estimation is not higher than the audio-based estimation, then, at 640, the spatial analysis system 100 analyzes remote attendance. In this case, more unique people were speaking than expected. In a remote attendance analysis, the audio samples 412 and/or feature vectors 415 are analyzed to detect the presence of audio signatures that correspond to the output of a speaker device 205. Speaker devices 205 have unique audio characteristics such as the presence or absence of particular frequency patterns. The remote attendance analysis identifies the presence or absence of these audio characteristics within the audio samples or within a particular cluster. For example, if the motion-based estimation yielded an estimated occupancy of four attendees and the audio-based estimation process was seeded with an initial estimation of four, but ultimately detected five clusters, then a remote attendance analysis is performed. Upon performing the remote attendance analysis, one of the five audio-based clusters may have the characteristics that correspond to audio projected through a speaking device 205. Thereafter, at 631, an output is generated indicating that number of occupants and the number of remote attendees.

The flowchart described in Fig. 6 may be implemented on a continuous basis so that a data stream of audio samples and motion samples are continuously received. Moreover, the processes described in Fig. 6 may take place continuously for each consecutive timeslot.

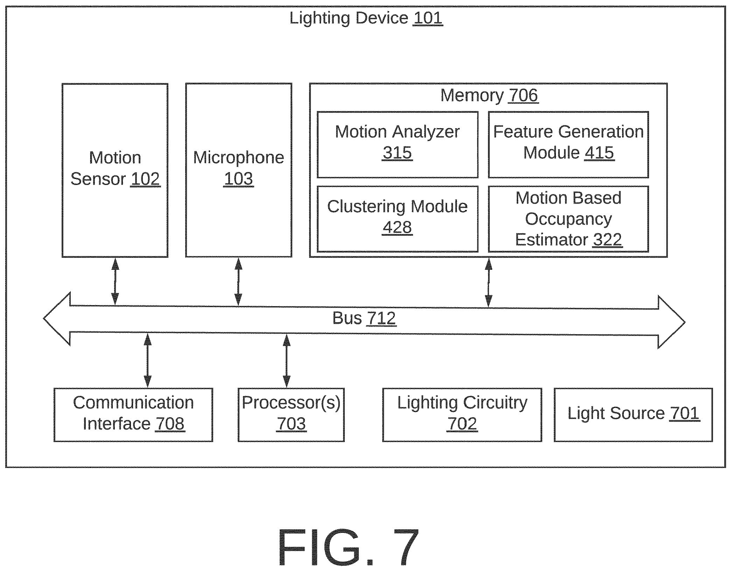

Fig 7 schematically shows an embodiment of a lighting device 101 in the spatial analysis system 100 of Fig. 1. The lighting device 101 may be considered a client device. The lighting device 101 includes a light source 701 such as, for example one or more Light Emitting Devices (LEDs), an incandescent light source, or a fluorescent light source. The lighting device includes lighting circuitry 702 such as, for example, a power source, driver, regulator, switches, or other circuity for controlling the light source 701.

The lighting device 101 also includes a processor(s) 703, a memory 706, and a communication interface 708, each of which are coupled to a local interface 712 or bus. The lighting device 101 further includes a motion sensor 102, a microphone 103. The motion sensor 102 and microphone 103 may be a wired accessory, wireless accessory, or an integrated component with respect to the lighting device 101.

The communication interface 708 may include hardware, such as, for example, a network interface card, a modem, a transceiver, or radio and/or may include software such as, for example, a software module that encodes/decodes communication packets for transmission and receipt. The local interface 712 may comprise, for example, a data bus with an accompanying address/control bus or other bus structure as can be appreciated.

Stored in the memory 706 are both data and several components that are executable by the processor 703. In particular, stored in the memory 706 and executable by the processor 703 is the motion analyzer 315, motion based occupancy estimator 322, feature generation module 415, and clustering module 428. In addition, an operating system or firmware may be stored in the memory 706 and executable by the processor 703. In another embodiment, the components such as, for example, the motion analyzer 315, feature generation module 415, and clustering module 428 may be executed remotely in whole or in part by a computing system 106. Thus, the functionality provided by the lighting device may be part of a distributed architecture.

The communication interface 708 is configured to communicate with the computing system 106. The processor 703 uses the communication interface 708 to establish communication with components external to the lighting device 101. For example, the processor 703 may send instructions to the communication interface 708 to cause the transmission of a raw or processed data samples. Similarly, data received from the communication interface 708 is forwarded to the processor 703.

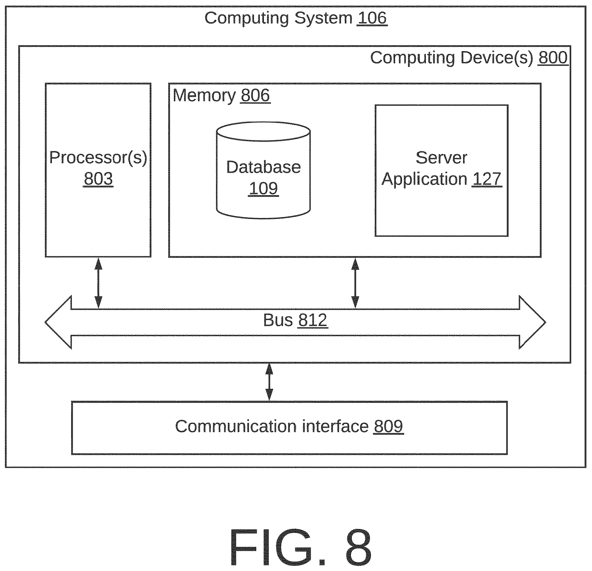

Fig. 8 schematically shows an embodiment of a computing system 106 in the spatial analysis system 100 of Fig. 1. The computing system 106 includes one or more computing devices 800. Each computing device 800 includes at least one processor circuit, for example, having a processor 803, a memory 806, and a communication interface 809, each of which are coupled to a local interface 812 or bus. Each computing device 800 may comprise, for example, at least one server computer or like device. The communication interface 809 may include hardware, such as, for example, a network interface card, a modem, a transceiver, or radio and/or may include software such as, for example, a software module that encodes/decodes communication packets for transmission and receipt. The local interface 812 may comprise, for example, a data bus 812 with an accompanying address/control bus or other bus structure as can be appreciated.

Stored in the memory 806 are both data and several components that are executable by the processor 803. In particular, stored in the memory 806 and executable by the processor 803 is the server application 127. The server application 127 may implement at least some of the functionality that includes the motion analyzer 315, motion based occupancy estimator 322, feature generation module 415, and clustering module 428.

Also stored in the memory 806 may be a database 109 and other data. In addition, an operating system may be stored in the memory 806 and executable by the processor 803.

The communication interface 809 is configured to communicate with a plurality of lighting devices 101 over the network 105. The processor 803 uses the communication interface 809 to establish communication with components external to the computing system 106. For example, the processor 803 may send instructions to the communication interface 809 to cause the transmission of data to and from the lighting devices 101. Data received from the communication interface 809 is forwarded to the processor 803.

With respect to both Fig. 7 and Fig, 8, it is understood that there may be other applications that are stored in the memory 706, 806 and are executable by the processor 703, 803 as can be appreciated. Where any component discussed herein is implemented in the form of software, any one of a number of programming languages may be employed, such as, for example, C, C++, C#, Objective C, Java^{®}, JavaScript^{®}, Perl, PHP, Visual Basic^{®}, Python^{®}, Ruby, Flash^{®}, or other programming languages.

Several software components are stored in the memory 706, 806 and are executable by the processor 703, 803. In this respect, the term "executable" means a program file that is in a form that can ultimately be run by the processor 703, 803. Examples of executable programs may be, for example, a compiled program that can be translated into machine code in a format that can be loaded into a random access portion of the memory 706, 806 and run by the processor 703, 803, source code that may be expressed in proper format such as object code that is capable of being loaded into a random access portion of the memory 706, 806 and executed by the processor 703, 803, or source code that may be interpreted by another executable program to generate instructions in a random access portion of the memory 706, 806 to be executed by the processor 703, 803, *etc.* An executable program may be stored in any portion or component of the memory 706, 806 including, for example, random access memory (RAM), read-only memory (ROM), hard drive, solid-state drive, USB flash drive, memory card, optical disc such as compact disc (CD) or digital versatile disc (DVD), floppy disk, magnetic tape, or other memory components.

The memory 706, 806 is defined herein as including both volatile and nonvolatile memory and data storage components. Volatile components are those that do not retain data values upon loss of power. Nonvolatile components are those that retain data upon a loss of power. Thus, the memory 706, 806 may comprise, for example, random access memory (RAM), read-only memory (ROM), hard disk drives, solid-state drives, USB flash drives, memory cards accessed via a memory card reader, floppy disks accessed via an associated floppy disk drive, optical discs accessed via an optical disc drive, magnetic tapes accessed via an appropriate tape drive, and/or other memory components, or a combination of any two or more of these memory components. In addition, the RAM may comprise, for example, static random access memory (SRAM), dynamic random access memory (DRAM), or magnetic random access memory (MRAM) and other such devices. The ROM may comprise, for example, a programmable read-only memory (PROM), an erasable programmable read-only memory (EPROM), an electrically erasable programmable read-only memory (EEPROM), or other like memory device.

Also, the processor 703, 803 may represent multiple processors 703, 803 and/or multiple processor cores and the memory 706, 806 may represent multiple memories 706, 806 that operate in parallel processing circuits, respectively. In such a case, the local interface 712, 812 may be an appropriate network that facilitates communication between any two of the multiple processors 703, 803, between any processor 703, 803 and any of the memories 706, 806, or between any two of the memories 706, 806, *etc.* The local interface 712, 812 may comprise additional systems designed to coordinate this communication, including, for example, performing load balancing. The processor 703, 803 may be of electrical or of some other available construction.

Although the software applications or programs as described herein may be embodied in software or code executed by general purpose hardware as discussed above, as an alternative the same may also be embodied in dedicated hardware or a combination of software/general purpose hardware and dedicated hardware. If embodied in dedicated hardware, each can be implemented as a circuit or state machine that employs any one of or a combination of a number of technologies. These technologies may include, but are not limited to, discrete logic circuits having logic gates for implementing various logic functions upon an application of one or more data signals, application specific integrated circuits (ASICs) having appropriate logic gates, field-programmable gate arrays (FPGAs), or other components, etc. Such technologies are generally well known by those skilled in the art and, consequently, are not described in detail herein.

The foregoing detailed description has set forth a few of the many forms that the invention can take. The above examples are merely illustrative of several possible embodiments of various aspects of the present invention, wherein equivalent alterations and/or modifications will occur to others skilled in the art upon reading and understanding the present invention and the annexed drawings. In particular, in regard to the various functions performed by the above described components (devices, systems, and the like), the terms (including a reference to a "means") used to describe such components are intended to correspond, unless otherwise indicated to any component such as hardware or combinations thereof, which performs the specified function of the described component (i.e., that is functionally equivalent), even though not structurally equivalent to the disclosed structure which performs the function in the illustrated implementations of the disclosure.

Although a particular feature of the present invention may have been illustrated and/or described with respect to only one of several implementations, any such feature may be combined with one or more other features of the other implementations as may be desired and advantageous for any given or particular application. Furthermore, references to singular components or items are intended, unless otherwise specified, to encompass two or more such components or items. Also, to the extent that the terms "including", "includes", "having", "has", "with", or variants thereof are used in the detailed description and/or in the claims, such terms are intended to be inclusive in a manner similar to the term "comprising".

The present invention has been described with reference to the preferred embodiments. However, modifications and alterations will occur to others upon reading and understanding the preceding detailed description. It is intended that the present invention be construed as including all such modifications and alterations. It is only the claims, including all equivalents that are intended to define the scope of the present invention.

In the claims references in parentheses refer to reference signs in drawings of exemplifying embodiments or to formulas of embodiments, thus increasing the intelligibility of the claim. These references shall not be construed as limiting the claim.

## Claims

1. A system for estimating a number of occupants in a room, the system comprising:
a motion sensor (102) configured to generate motion samples (312);
a microphone (103) configured to generate audio samples (412); and
at least one processor (703, 803),
**characterized in that** the at least one processor is configured to:
detect motion events (318) from the motion samples to determine a first estimated number of occupants in the room (325) based on at least one of a number of the detected motion events (318) and a type of the detected motion events (318);
analyze the audio samples to derive a second estimated number of occupants in the room (437) based on a series of feature vectors (418, 421) derived from the analyzed audio samples; wherein the feature vectors (418, 421) correspond to a series of sample windows; and cluster the series of feature vectors into a number of clusters using the first estimated number as an initial cluster count, wherein the number of clusters is the second estimated number;
compare the first estimated number (325) to the second estimated number (437) to determine whether the audio-based estimation and the motion-based estimation agree; and
generate an output comprising a number of occupants in the room in response to the comparison if the two estimations agree such that they are the same.

2. The system of Claim 1, wherein if the two estimations disagree, then the at least one processor (703, 803) is further configured to determine whether the motion-based estimation is higher or lower than the audio-based estimation; and
- if the motion-based estimation is higher, the at least one processor (703, 803) is further configured to reconfigure the motion detection process;
- if the motion-based estimation is not higher than the audio-based estimation, the at least one processor (703, 803) is further configured to analyze remote attendance.

3. The system of Claim 1, further comprising a luminaire, the luminaire comprising the motion sensor and the microphone

4. The system of Claim 1, wherein the motion sensor comprises a passive infrared sensor and wherein the motion events comprise at least a minor motion event and a major motion event.

5. The system of Claim 1, wherein the feature vectors are clustered according to k-means clustering such that the first estimated number is provided as a seed value to the k-means clustering.

6. The system of Claim 1, wherein the series of feature vectors comprise vectors of Mel Frequency Cepstral Coefficients.

7. A computer-implemented method for estimating the number of occupants in a room with at least one processor (703, 803), the method comprising:
receiving motion samples (312) from a motion sensor (102);
receiving audio samples (412) from a microphone (103),
**characterized in**:
detecting motion events (318) from the motion samples to determine a first estimated number of occupants in the room (325) based on at least one of a number of the detected motion events (318) and a type of the detected motion events (318);
analyzing the audio samples to derive a second estimated number of occupants in the room (437) based on a series of feature vectors (418, 421) derived from the analyzed audio samples; wherein the feature vectors (418, 421) correspond to a series of sample windows; cluster the series of feature vectors into a number of clusters using the first estimated number as an initial cluster count, and wherein the number of clusters is the second estimated number;
comparing the first estimated number (325) to the second estimated number (437) to determine whether the audio-based estimation and the motion-based estimation agree; and
generating an output comprising a number of occupants in the room in response to the comparison if the two estimations agree such that they are the same.

8. The method of Claim 7, wherein the motion sensor and the microphone are positioned within a luminaire installed in the room.

9. The method of Claim 7, wherein the motion sensor comprises a passive infrared sensor and wherein the motion events comprise at least a minor motion event and a major motion event.

10. The method of Claim 7, wherein the feature vectors are clustered according to k-means clustering such that the first estimated number is provided as a seed value to the k-means clustering.

11. The method of Claim 7, wherein the series of feature vectors comprise vectors of Mel Frequency Cepstral Coefficients.

12. The method of Claim 7, further comprising determining whether a cluster among the clusters corresponds to audio originating from a speaker device (205).

## Patentansprüche

1. System zum Schätzen einer Anzahl von Bewohnern in einem Raum, das System umfassend:
einen Bewegungssensor (102), der konfiguriert ist, um Bewegungsabtastungen (312) zu erzeugen;
ein Mikrofon (103), das konfiguriert ist, um Audioabtastungen (412) zu erzeugen; und
mindestens einen Prozessor (703, 803),
**dadurch gekennzeichnet, dass** der mindestens eine Prozessor ferner konfiguriert ist zum:
Erkennen von Bewegungsereignissen (318) von den Bewegungsabtastungen, um eine erste geschätzte Anzahl von Bewohnern in dem Raum (325) basierend auf mindestens einem von einer Anzahl der erkannten Bewegungsereignisse (318) und einer Art der erkannten Bewegungsereignisse (318) zu bestimmen;
Analysieren der Audioabtastungen, um eine zweite geschätzte Anzahl von Bewohnern in dem Raum (437) basierend auf einer Reihe von Merkmalsvektoren (418, 421), die von den analysierten Audioabtastungen abgeleitet sind, abzuleiten, wobei die Merkmalsvektoren (418, 421) einer Reihe von Abtastfenstern entsprechen; und Clustern der Reihe von Merkmalsvektoren in eine Anzahl von Clustern unter Verwendung der ersten geschätzten Anzahl als eine anfängliche Cluster-Zählung, wobei die Anzahl von Clustern die zweite geschätzte Anzahl ist;
Vergleichen der ersten geschätzten Anzahl (325) mit der zweiten geschätzten Anzahl (437), um zu bestimmen, ob die audiobasierte Schätzung und die bewegungsbasierte Schätzung übereinstimmen; und
Erzeugen einer Ausgabe, umfassend eine Anzahl von Bewohnern in dem Raum, als Reaktion auf den Vergleich, ob die beiden Schätzungen derart übereinstimmen, dass sie gleich sind.

2. System nach Anspruch 1, wobei, wenn die beiden Schätzungen nicht übereinstimmen, der mindestens eine Prozessor (703, 803) dann ferner konfiguriert ist, um zu bestimmen, ob die bewegungsbasierte Schätzung höher oder niedriger als die audiobasierte Schätzung ist; und
- wenn die bewegungsbasierte Schätzung höher ist, der mindestens eine Prozessor (703, 803) ferner konfiguriert ist, um den Bewegungserkennungsvorgang zu rekonfigurieren;
- wenn die bewegungsbasierte Schätzung nicht höher als die audiobasierte Schätzung ist, der mindestens eine Prozessor (703, 803) ferner konfiguriert ist, um eine Fernanwesenheit zu analysieren.

3. System nach Anspruch 1, ferner umfassend eine Leuchte, die Leuchte umfassend den Bewegungssensor und das Mikrofon.

4. System nach Anspruch 1, wobei der Bewegungssensor einen passiven Infrarotsensor umfasst und wobei die Bewegungsereignisse mindestens ein kleines Bewegungsereignis und ein größeres Bewegungsereignis umfassen.

5. System nach Anspruch 1, wobei die Merkmalsvektoren gemäß K-Means-Clustering derart geclustert sind, dass die erste geschätzte Anzahl als ein Startwert für das K-Means-Clustering bereitgestellt wird.

6. System nach Anspruch 1, wobei die Reihe von Merkmalsvektoren Vektoren von Mel-Frequenz-Cepstralkoeffizienten umfassen.

7. Computerimplementiertes Verfahren zum Schätzen der Anzahl von Bewohnern in einem Raum mit mindestens einem Prozessor (703, 803), das Verfahren umfassend:
Empfangen von Bewegungsabtastungen (312) von einem Bewegungssensor (102);
Empfangen von Audioabtastungen (412) von einem Mikrofon (103),
**gekennzeichnet durch:**
Erkennen von Bewegungsereignissen (318) von den Bewegungsabtastungen, um eine erste geschätzte Anzahl von Bewohnern in dem Raum (325) basierend auf mindestens einem von einer Anzahl der erkannten Bewegungsereignisse (318) und einer Art der erkannten Bewegungsereignisse (318) zu bestimmen;
Analysieren der Audioabtastungen, um eine zweite geschätzte Anzahl von Bewohnern in dem Raum (437) basierend auf einer Reihe von Merkmalsvektoren (418, 421), die von den analysierten Audioabtastungen abgeleitet sind, abzuleiten, wobei die Merkmalsvektoren (418, 421) einer Reihe von Abtastfenstern entsprechen; Clustern der Reihe von Merkmalsvektoren in eine Anzahl von Clustern unter Verwendung der ersten geschätzten Anzahl als eine anfängliche Cluster-Zählung, und wobei die Anzahl von Clustern die zweite geschätzte Anzahl ist;
Vergleichen der ersten geschätzten Anzahl (325) mit der zweiten geschätzten Anzahl (437), um zu bestimmen, ob die audiobasierte Schätzung und die bewegungsbasierte Schätzung übereinstimmen; und
Erzeugen einer Ausgabe, umfassend eine Anzahl von Bewohnern in dem Raum als Reaktion auf den Vergleich, ob die beiden Schätzungen derart übereinstimmen, dass sie gleich sind.

8. Verfahren nach Anspruch 7, wobei der Bewegungssensor und das Mikrofon innerhalb einer in dem Raum installierten Leuchte positioniert sind.

9. Verfahren nach Anspruch 7, wobei der Bewegungssensor einen passiven Infrarotsensor umfasst und wobei die Bewegungsereignisse mindestens ein kleines Bewegungsereignis und ein größeres Bewegungsereignis umfassen.

10. Verfahren nach Anspruch 7, wobei die Merkmalsvektoren gemäß K-Means-Clustering derart geclustert sind, dass die erste geschätzte Anzahl als ein Startwert für das K-Means-Clustering bereitgestellt wird.

11. Verfahren nach Anspruch 7, wobei die Reihe von Merkmalsvektoren Vektoren von Mel-Frequenz-Cepstralkoeffizienten umfasst.

12. Verfahren nach Anspruch 7, ferner umfassend das Bestimmen, ob ein Cluster unter den Clustern Audio entspricht, das von einer Lautsprechervorrichtung (205) stammt.

## Revendications

1. Système permettant d'estimer un nombre d'occupants dans une pièce, le système comprenant :
un capteur de mouvement (102) configuré pour générer des échantillons de mouvement (312) ;
un microphone (103) configuré pour générer des échantillons audio (412) ; et
au moins un processeur (703, 803),
**caractérisé en ce que** l'au moins un processeur est configuré pour :
détecter des événements de mouvement (318) à partir des échantillons de mouvement pour déterminer un premier nombre estimé d'occupants dans la pièce (325) en fonction d'au moins l'un parmi un nombre des événements de mouvement détectés (318) et un type des événements de mouvement détectés (318) ;
analyser les échantillons audio pour dériver un second nombre estimé d'occupants dans la pièce (437) en fonction d'une série de vecteurs caractéristiques (418, 421) dérivés des échantillons audio analysés ; les vecteurs caractéristiques (418, 421) correspondant à une série de fenêtres d'échantillonnage ; et regrouper en grappes la série de vecteurs caractéristiques en un nombre de grappes à l'aide du premier nombre estimé en guise de comptage initial de grappes, le nombre de grappes étant le second nombre estimé ;
comparer le premier nombre estimé (325) au second nombre estimé (437) pour déterminer si l'estimation basée sur l'audio et l'estimation basée sur le mouvement concordent ; et
générer une sortie comprenant un nombre d'occupants dans la pièce en réponse à la comparaison si les deux estimations concordent de sorte qu'elles sont identiques.

2. Système selon la revendication 1, dans lequel si les deux estimations divergent, alors l'au moins un processeur (703, 803) est configuré en outre pour déterminer si l'estimation basée sur le mouvement est plus élevée ou plus basse que l'estimation basée sur l'audio ; et
- si l'estimation basée sur le mouvement est plus élevée, l'au moins un processeur (703, 803) est configuré en outre pour reconfigurer le processus de détection de mouvement ;
- si l'estimation basée sur le mouvement n'est pas plus élevée que l'estimation basée sur l'audio, l'au moins un processeur (703, 803) est configuré en outre pour analyser une présence à distance.

3. Système selon la revendication 1, comprenant en outre un luminaire, le luminaire comprenant le capteur de mouvement et le microphone.

4. Système selon la revendication 1, dans lequel le capteur de mouvement comprend un capteur infrarouge passif et dans lequel les événements de mouvement comprennent au moins un événement de mouvement mineur et un événement de mouvement majeur.

5. Système selon la revendication 1, dans lequel les vecteurs caractéristiques sont regroupés en grappes selon un regroupement en grappes à k-moyennes de sorte que le premier nombre estimé est fourni en tant que valeur de départ pour le regroupement en grappes à k-moyennes.

6. Système selon la revendication 1, dans lequel la série de vecteurs caractéristiques comprend des vecteurs de coefficients cepstraux de fréquence Mel.

7. Procédé implémenté par ordinateur permettant d'estimer le nombre d'occupants dans une pièce avec au moins un processeur (703, 803), le procédé comprenant :
la réception d'échantillons de mouvement (312) à partir d'un capteur de mouvement (102) ;
la réception d'échantillons audio (412) à partir d'un microphone (103),
**caractérisé par** :
la détection d'événements de mouvement (318) à partir des échantillons de mouvement pour déterminer un premier nombre estimé d'occupants dans la pièce (325) en fonction d'au moins l'un parmi un nombre des événements de mouvement détectés (318) et un type des événements de mouvement détectés (318) ;
l'analyse des échantillons audio pour dériver un second nombre estimé d'occupants dans la pièce (437) en fonction d'une série de vecteurs caractéristiques (418, 421) dérivés des échantillons audio analysés ; les vecteurs caractéristiques (418, 421) correspondant à une série de fenêtres d'échantillonnage ; regrouper en grappes la série de vecteurs caractéristiques en un nombre de grappes à l'aide du premier nombre estimé en guise de comptage initial de grappes, le nombre de grappes étant le second nombre estimé ;
la comparaison du premier nombre estimé (325) au second nombre estimé (437) pour déterminer si l'estimation basée sur l'audio et l'estimation basée sur le mouvement concordent ; et
la génération d'une sortie comprenant un nombre d'occupants dans la pièce en réponse à la comparaison si les deux estimations concordent de sorte qu'elles sont identiques.

8. Procédé selon la revendication 7, dans lequel le capteur de mouvement et le microphone sont positionnés au sein d'un luminaire installé dans la pièce.

9. Procédé selon la revendication 7, dans lequel le capteur de mouvement comprend un capteur infrarouge passif et dans lequel les événements de mouvement comprennent au moins un événement de mouvement mineur et un événement de mouvement majeur.

10. Procédé selon la revendication 7, dans lequel les vecteurs caractéristiques sont regroupés en grappes selon un regroupement en grappes à k-moyennes de sorte que le premier nombre estimé est fourni en tant que valeur de départ pour le regroupement en grappes à k-moyennes.

11. Procédé selon la revendication 7, dans lequel la série de vecteurs caractéristiques comprend des vecteurs de coefficients cepstraux de fréquence Mel.

12. Procédé selon la revendication 7, comprenant en outre le fait de déterminer si une grappe parmi les grappes correspond à de l'audio provenant d'un dispositif de haut-parleur (205).
